# FASCICULE DE BREVET EUROPEEN

(11) **EP 1 836 028 B1**
(45) Date de publication et mention de la délivrance du brevet: **30.04.2008**
(21) Numéro de dépôt: 05857333.8
(22) Date de dépôt: 16.12.2005
(51) Int. Cl.: B25J 21/02

(54) **DISPOSITIF D'INTERVENTION MOTORISE POUR BOITE A GANT ET BOITE A GANT EQUIPEE D'UN TEL DISPOSITIF**
ANGETRIEBENE BETÄTIGUNGSVORRICHTUNG FÜR HANDSCHUHFACH UND DAMIT AUSGESTATTETES HANDSCHUHFACH
POWERED OPERATION DEVICE FOR GLOVE BOX AND GLOVE BOX EQUIPPED WITH SAME

(30) Priorité: 21.12.2004 FR 0453123
(43) Date de publication de la demande: 26.09.2007
(73) Titulaire: STMI Société des Techniques en Milieu Ionisant, F-91196 Gif-sur-Yvette (FR); Areva NC, 75009 Paris (FR)
(72) Inventeur: LADET, Xavier, F-84290 Cairanne (FR); ALANORE, Jean-Pierre, F-34200 SETE (FR); BOLCATO, Patrick, F-84500 Bollene (FR)
(74) Mandataire: Poulin, Gérard
(86) Numéro de dépôt international: PCT/FR2005/051096
(87) Numéro de publication internationale: WO 2006/090036

(56) Documents cités:
- EP-A- 0 504 013
- FR-A- 2 351 306
- FR-A- 2 759 619

## Description

### DOMAINE TECHNIQUE

La présente invention se rapporte de façon générale au domaine des boîtes à gant définissant des enceintes de confinement, ainsi qu'aux dispositifs d'intervention motorisés destinés à fonctionner à l'intérieur de ces boîtes à gant.

L'invention est donc susceptible de trouver. une application dans toute industrie utilisant de telles boîtes à gant, comme les industries pharmaceutique, chimique, cosmétique, agroalimentaire, etc.

Néanmoins, la présente invention trouve une application toute particulière mais non restrictive dans le domaine du nucléaire, par exemple dans celui de la manipulation de poudres nucléaires, notamment en vue de la fabrication de combustible nucléaire, tel que du combustible MOX, ou par exemple dans celui de l'assainissement ou du démantèlement de boîtes à gant.

L'invention a également trait à un procédé d'assemblage d'un dispositif d'intervention motorisé sur une boîte à gant disposant d'au moins un cylindre d'accostage, les dispositifs d'intervention motorisés étant par exemple du type aspirateur, perceuse, scie, meuleuse, tronçonneuse, perforateur, etc.

### ÉTAT DE LA TECHNIQUE ANTÉRIEURE

Les boîtes à gant définissant des enceintes de confinement sont largement connues dans le domaine de la fabrication de combustible nucléaire, notamment dans le cadre de la fabrication de pastilles de combustible MOX.

Ces pastilles sont effectivement réalisées sous enceinte de confinement par l'assemblage de poudres d'oxyde de plutonium et d'uranium comprimées sous très haute pression dans des gabarits appropriés, cette opération de compression étant suivie d'une opération de rectification par meulage à sec.

Cette dernière opération fait inéluctablement apparaître des résidus de poudres en quantités dans l'enceinte de confinement. Ainsi, pour des raisons évidentes de qualité des produits fabriqués, la boîte à gant est habituellement nettoyée entre les phases de fabrication de pastilles à teneurs différentes, ces phases de nettoyage étant également appelées « campagnes inter-teneur ».

Pour réaliser le nettoyage requis, la boîte à gant est équipée d'un ou plusieurs aspirateurs rapportés solidairement et entièrement à l'intérieur de la boîte à gant, ce qui a tout d'abord pour conséquences néfastes de toucher à l'intégrité de cette boîte, de nécessiter un temps de montage relativement long, et également d'engendrer un encombrement important à l'intérieur de cette boîte à gant.

Par ailleurs, il est noté que les aspirateurs, et plus particulièrement la partie moteur de ceux-ci, présente une durée de vie et une fiabilité faibles en raison de l'ambiance abrasive régnant à l'intérieur de l'enceinte de confinement et générée par la présence des poudres de combustible nucléaire en grandes quantités, la durée de vie et la fiabilité étant également altérées par la température élevée et l'atmosphère en azote rencontrées à l'intérieur de la boîte à gant.

En effet, la température élevée, de l'ordre de 40 à 50°C, implique que la partie moteur de l'aspirateur a tendance à surchauffer rapidement, tandis que les poudres abrasives provoquent inévitablement un court-circuitage du rotor de cette partie moteur après quelques heures de fonctionnement seulement, voire après une durée encore plus courte.

Par conséquent, les aspirateurs doivent être fréquemment remplacés, ce qui engendre simultanément des déchets en grandes quantités, un temps d'intervention élevé et contraignant pour les opérateurs, associé bien entendu à une dosimétrie importante de ces derniers.

En outre, un autre inconvénient lié à cette configuration de l'art antérieur est que les aspirateurs installés à l'intérieur de la boîte à gant ne permettent pas de réaliser une aspiration optimisée en fonction de la localisation des poudres à aspirer, à moins éventuellement d'utiliser un flexible d'aspiration de longueur conséquente. Dans ce dernier cas, la longueur particulièrement importante du flexible d'aspiration accentue alors de façon non négligeable le volume des déchets, et constitue surtout un inconvénient en termes d'encombrement et de facilité de manipulation à l'intérieur de la boîte à gant.

Il est indiqué que cette optimisation d'aspiration se retrouve également lors de la réalisation d'opérations d'assainissement et de démantèlement des boîtes à gant dans lesquelles on est amené à aspirer soit directement les poussières (comprenant les contaminants), soit les produits de décontamination qui une fois utilisés se retrouvent sous la forme sèche, tel que le gel organominéral de décontamination décrit dans le document FR-A-2 746 328.

Enfin, il est indiqué que des inconvénients identiques ou similaires, et éventuellement d'autres inconvénients, surviennent lorsqu'il s'agit d'équiper la boîte à gant avec un autre dispositif d'intervention motorisé qu'un aspirateur, tel que par exemple une perceuse, une scie, une meuleuse, une tronçonneuse, ou encore un perforateur.

D'autre part, au moins une partie des inconvénients cités ci-dessus se retrouve naturellement pour les boîtes à gant équipées de tels dispositifs d'intervention motorisés et destinées à d'autres types d'industries, comme les industries pharmaceutique, chimique, cosmétique, ou encore agroalimentaire.

Par ailleurs, le document FR-A-2 351 306 montre un dispositif d'intervention motorisé pour boîte à gants comportant une partie moteur fixée sur un palier étanche cylindrique monté sur une paroi de la boîte à gants et reliée par des joints d'articulation à une partie réceptrice à l'intérieur de la boîte à gants.

### EXPOSÉ DE L'INVENTION

L'invention a donc pour but de proposer un dispositif d'intervention motorisé pour boîte à gant ainsi qu'une boîte à gant disposant d'au moins un cylindre d'accostage et étant équipée d'un tel dispositif, ce dispositif et cette boîte à gant remédiant au moins partiellement aux inconvénients mentionnés ci-dessus relatifs aux réalisations de l'art antérieur et permettant un montage du dispositif sans altération de l'intégrité de la boîte à gants.

En outre, l'invention a également pour but de présenter un procédé d'assemblage d'un tel dispositif d'intervention motorisé sur une boîte à gant.

Pour ce faire, l'invention a tout d'abord pour objet un dispositif d'intervention motorisé pour boîte à gant, le dispositif comportant une partie réceptrice destinée à être entraînée par une partie moteur. Selon l'invention, la partie réceptrice dispose de moyens de fixation primaires conçus de façon à permettre le montage de cette partie réceptrice à l'intérieur de la boîte à gant sur un cylindre d'accostage prévu sur cette dernière, et la partie moteur dispose de moyens de fixation secondaires conçus: de façon à permettre le montage de cette partie moteur sur ce même cylindre d'accostage, à l'extérieur de la boîte à gant.

De plus, l'invention a également pour objet une boîte à gant disposant d'au moins un cylindre d'accostage conçu de manière à pouvoir recevoir un équipement, la boîte à gant comprenant en outre un dispositif d'intervention motorisé comportant une partie réceptrice apte à être entraînée par une partie moteur et destinée à fonctionner à l'intérieur de cette boîte à gant. Selon l'invention, le dispositif d'intervention motorisé, assemblé sur un cylindre d'accostage de la boîte à gant, est tel que celui décrit ci-dessus et également objet de la présente invention.

Ainsi, de façon innovante, l'invention prévoit de monter un dispositif d'intervention motorisé directement sur un cylindre d'accostage d'une boîte à gant, sans que cela ne nécessite de modifier l'intégrité du cylindre d'accostage concerné, ni celle d'aucun autre élément constitutif de la boîte à gant. En effet, les moyens de fixation primaires et secondaires, assurant respectivement le montage de la partie réceptrice et de la partie moteur sur le cylindre d'accostage, sont spécifiquement conçus de manière à pouvoir coopérer directement avec des moyens complémentaires initialement prévus sur ce cylindre d'accostage, dans un but connu de permettre l'assemblage d'autres éléments ou équipements classiques tels qu'une tape interne de protection, ou encore une bague externe de sécurité.

L'intégrité de la boîte à gant n'étant pas altérée par le montage du dispositif d'intervention motorisé, le temps et la difficulté de montage de ce dispositif sont avantageusement diminués.

Par ailleurs, il est donc à comprendre que la partie moteur du dispositif n'est plus située à l'intérieur de la boîte à gant, mais entièrement à l'extérieur de celle-ci, ce qui implique qu'elle n'est avantageusement plus soumise aux conditions internes contraignantes telles que la haute température, l'atmosphère en azote, ou encore l'ambiance abrasive issue de la présence des poudres en grandes quantités.

Naturellement, cette spécificité engendre une augmentation significative de la durée de vie et de la fiabilité de la partie moteur, et plus globalement de celle de l'ensemble du dispositif d'intervention motorisé. De plus, cette amélioration provoque également une diminution du volume des déchets, une réduction importante du temps d'intervention lié aux changements des dispositifs motorisés, et, par voie de conséquence, une baisse non négligeable de la dosimétrie associée aux opérateurs.

En outre, la partie moteur n'étant plus située dans l'enceinte de confinement, son encombrement et son refroidissement ne constituent alors plus de problèmes majeurs, de sorte qu'il est par conséquent facilement envisageable de fabriquer cette partie moteur de façon plus volumineuse qu'antérieurement, afin qu'elle présente des performances accrues. En disposant ainsi d'une plus forte puissance, lorsque le dispositif d'intervention motorisé est un aspirateur, la durée des « campagnes inter-teneur » visant à assainir la boîte à gant peut alors être largement diminuée, ce qui contribue également avantageusement à faire baisser la dosimétrie des opérateurs.

De façon connue de l'homme du métier, les boîtes à gant classiques sont généralement pourvues d'une pluralité de cylindres d'accostage identiques ou similaires, ce qui implique que le dispositif d'intervention motorisé peut alternativement être monté sur chacun de cette pluralité de cylindres d'accostage.

Ainsi, lorsque le dispositif d'intervention motorisé est un aspirateur, il est alors facilement possible de réaliser une aspiration optimisée des poudres sans pour autant nécessiter de flexible de longueur importante, mais tout simplement en choisissant le cylindre d'accostage support de l'aspirateur en fonction de la localisation spécifique des poudres situées à l'intérieur de la boîte à gant.

De plus, le montage/démontage des parties moteur et réceptrice étant aisé et rapide à mettre en oeuvre, l'aspirateur peut ainsi facilement être déplacé d'un cylindre d'accostage à un autre plusieurs fois au cours d'une même « campagne inter-teneur », toujours dans le but d'optimiser l'aspiration en fonction de la localisation des poudres.

Préférentiellement, le dispositif d'intervention motorisé est tel que les moyens de fixation primaires comprennent des vis destinées à coopérer avec des trous taraudés prévus sur une collerette intérieure d'appui du cylindre d'accostage, et les moyens de fixation secondaires comprennent une bride équipée de saillies destinées à coopérer avec des rampes prévues sur le cylindre d'accostage, afin de permettre une fixation du type à baïonnette.

En d'autres termes, la partie réceptrice vient se fixer sur les trous taraudés prévus initialement sur la collerette intérieur d'appui du cylindre d'accostage, ces trous étant en effet prévus à l'origine principalement afin de permettre l'installation d'une tape interne de protection destinée à éviter qu'un équipement souple logé dans le cylindre concerné, tel qu'un gant, ne soit aspiré à l'intérieur de la boîte à gant en dépression. La tape interne de protection, également dite « tape amovible », qui n'est donc pas montée lorsque le dispositif d'intervention motorisé est assemblé sur le cylindre d'accostage, s'articule habituellement sur une charnière vissée dans un premier groupe de trous taraudés précités, et peut être verrouillée à l'aide d'un loquet de fermeture qui est quant à lui vissé sur un second groupe de trous taraudés précités, les trous du premier et du second groupe étant généralement diamétralement opposés sur la collerette intérieure d'appui.

De façon plus précise, on prévoit de préférence que les moyens de fixation primaires comprennent en outre deux taquets destinés à être montés sur la collerette intérieure d'appui du cylindre d'accostage par l'intermédiaire des vis et des trous taraudés mentionnés ci-dessus, ainsi que des vis moletées destinées à assurer l'assemblage d'un carter de la partie réceptrice, sur les taquets.

En ce qui concerne la partie moteur, les moyens de fixation secondaires viennent donc se fixer sur les rampes initialement prévues sur le cylindre d'accostage, ces rampes étant en effet prévues à l'origine principalement afin de permettre l'installation d'une bague externe de sécurité destinée à assurer le maintien à l'arraché de l'équipement logé dans le cylindre d'accostage, ou encore afin de permettre l'accouplement d'un canon d'éjection avec le cylindre concerné. Dans chacun de ces deux cas, les rampes hélicoïdales à butée anti-rotation permettent d'assurer une fixation du type à baïonnette entre le cylindre d'accostage et l'élément qui lui est accouplé, ces accouplements n'étant bien entendu pas possibles lorsque la partie moteur est assemblée sur le cylindre en question.

Au vu de ce qui précède, on peut s'apercevoir que le dispositif d'intervention motorisé proposé est tout à fait adapté pour être assemblé sur les cylindres d'accostage du type « LA CALHENE » (Marque Déposée), dont un exemple de réalisation est notamment décrit dans le document FR-A-2 652 143.

Typiquement, ces cylindres d'accostage présentent effectivement des rampes hélicoïdales pour établir des liaisons à baïonnettes ainsi que des trous taraudés tels que ceux exposés ci-dessus, et ne requièrent par conséquent aucune modification géométrique pour recevoir le dispositif d'intervention motorisé objet de la présente invention.

De préférence, le dispositif est à entraînement magnétique. On peut alors prévoir que la partie moteur comporte un plateau d'entraînement muni d'aimants permanents, et que la partie réceptrice comporte un plateau récepteur également muni d'aimants permanents, les aimants permanents étant alors de préférence disposés radialement sur leurs plateaux respectifs, c'est-à-dire « en couronne ».

De cette façon, en fonctionnement, les plateaux positionnés face à face et séparés par un équipement logé dans le cylindre d'accostage permettent d'assurer un entraînement satisfaisant sans contact, sans que cela n'altère le confinement existant, ni ne nécessite de modification de la géométrie initiale de la boîte à gant. Par ailleurs, le dispositif d'intervention motorisé monté sur le cylindre d'accostage garantit la pérennité des conditions de sûreté et de sécurité existantes à l'origine.

Comme mentionné précédemment, le dispositif peut être un aspirateur, impliquant alors que la partie réceptrice est une volute d'aspiration munie d'un manchon tubulaire pour le raccordement avec un flexible d'aspiration.

Ainsi, lorsque le dispositif d'intervention motorisé est assemblé sur la boîte à gant, la partie réceptrice et la partie moteur sont effectivement séparées par un équipement monté sur le cylindre d'accostage, cet équipement étant de préférence un hublot ou une tape pleine.

Toujours de manière préférentielle, la boîte à gant comporte une pluralité de cylindres d'accostage, chacun étant capable, alternativement, de recevoir le dispositif d'intervention motorisé. Comme cela ressort clairement de ce qui a été indiqué précédemment dans le cas où le dispositif prend la forme d'un aspirateur, le fait de pouvoir monter alternativement ce dernier sur différents cylindres d'accostage permet de pouvoir balayer correctement l'ensemble du volume de l'enceinte de confinement définie par la boîte à gant, et donc d'optimiser fortement l'aspiration des poudres lors des « campagnes inter-teneur ». A ce titre, il est précisé qu'il serait naturellement. également envisageable de monter simultanément plusieurs dispositifs d'intervention sur divers cylindres d'accostage, sans sortir du cadre de l'invention.

La boîte à gant, qui est par exemple destinée à fonctionner en dépression, trouve une application particulière dans le domaine de la fabrication de combustible nucléaire, mais pourrait également s'appliquer à d'autres types d'industries, comme les industries pharmaceutique, chimique, cosmétique, ou encore agroalimentaire, etc.

De la même façon, si l'aspirateur constitue une réalisation préférentielle pour le dispositif d'intervention motorisé, celui-ci peut aussi prendre la forme d'une perceuse, d'une scie, d'une meuleuse, d'une tronçonneuse, d'un perforateur, ou de tout autre dispositif motorisé susceptible d'être requis à l'intérieur d'une boîte à gant.

Enfin, l'invention a également pour objet un procédé d'assemblage du dispositif d'intervention motorisé sur une boîte à gant disposant d'au moins un cylindre d'accostage conçu de manière à pouvoir recevoir un équipement. Selon l'invention, ce procédé comprend les étapes suivantes :
- introduction de la partie réceptrice du dispositif d'intervention motorisé à l'intérieur de la boite à gant ;
- montage de la partie réceptrice sur un cylindre d'accostage de la boîte à gant ; et
- montage à l'extérieur de la boîte à gant de la partie moteur sur le cylindre d'accostage.
   D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un dispositif d'intervention motorisé selon un mode de réalisation préféré de la présente invention, avant son installation sur une boîte à gant uniquement représentée de façon très partielle ; et
- la figure 2 représente une vue en coupe prise selon le plan P de la figure 1, lorsque le dispositif d'intervention motorisé est assemblé sur la boîte à gant.

### EXPOSÉ DÉTAILLÉ DE MODES DE RÉALISATION PRÉFÉRÉS

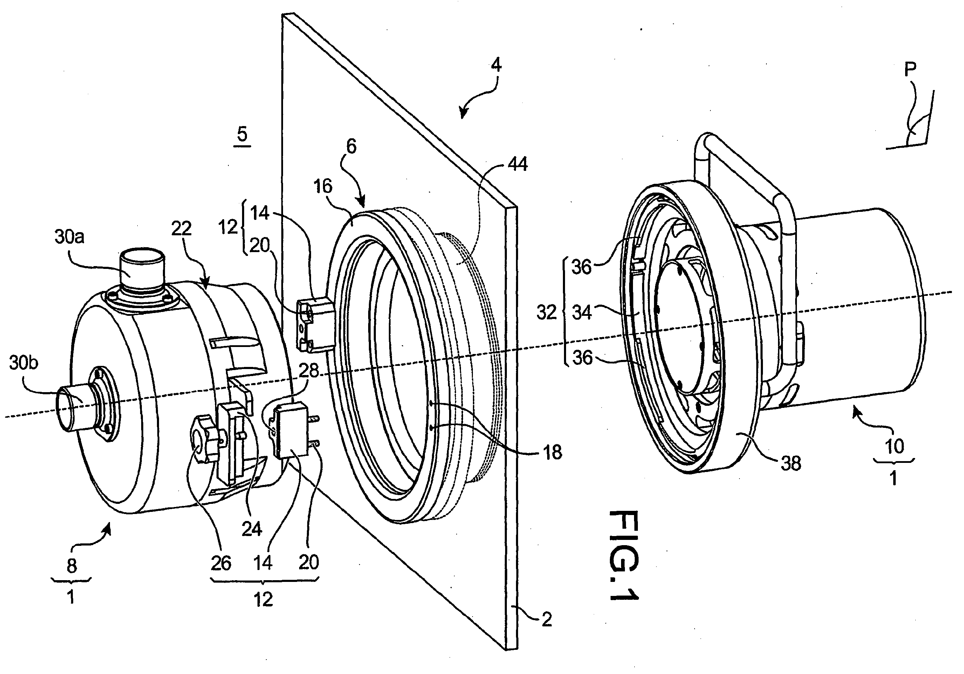

En référence tout d'abord à la figure 1 montrant un dispositif d'intervention motorisé 1 se présentant sous la forme d'un mode de réalisation préféré de la présente invention, on peut également voir une partie d'une paroi 2 appartenant à une boîte à gant 4 également objet de l'invention, et susceptible de fonctionner en dépression.

La partie de paroi 2 de la boîte à gant 4, qui définit une enceinte de confinement 5, comporte un cylindre d'accostage 6 du type LA CALHENE (Marque Déposée), capable de recevoir des équipements connus tels qu'un gant, un hublot, un sac, une tape pleine, etc. Bien entendu, si un seul cylindre d'accostage 6 est visible sur la figure 1, il est à comprendre que la boîte à gant 4 dispose en réalité d'une pluralité de cylindres d'accostage identiques ou similaires, dont le nombre est fonction de la taille de cette boîte à gant 4. De plus, la boîte à gant 4 est également susceptible de comporter tout autre équipement classique et connu de l'homme de métier, tel qu'un ou plusieurs sas.

Dans ce mode de réalisation préféré où la boîte à gant 4 est destinée à la fabrication de combustible nucléaire et où le dispositif d'intervention motorisé 1 est un aspirateur, il est indiqué que ce dernier se présente globalement sous la forme de deux parties distinctes 8, 10 à entraînement sans contact, et de préférence à entraînement magnétique.

En effet, l'aspirateur 1 comprend une partie réceptrice 8 ou volute d'aspiration destinée à être montée dans l'enceinte de confinement 5 sur le cylindre d'accostage 6, ainsi qu'une partie moteur 10 destinée à être montée sur le même cylindre 6, mais à: l'extérieur de la boîte à gant.

Pour ce faire, la partie réceptrice 8 comporte des moyens de fixation primaires 12 disposant tout d'abord de deux taquets 14 (un seul étant montré en position fixée sur la figure 1), qui sont chacun destinés à être assemblés par vissage sur le cylindre d'accostage 6, et plus précisément sur une collerette intérieure d'appui 16 de ce dernier, cette collerette 16 étant en effet en appui étanche sur une surface intérieure de la paroi 2, de préférence réalisée en Lexan (Marque Déposée) .

La collerette d'appui 16 étant initialement munie de quatre trous taraudés 18 répartis en deux groupes de deux disposés de façon diamétralement opposée sur cette collerette 16, les deux taquets 14 peuvent alors être facilement montés sur cette dernière, chacun à l'aide de deux vis 20 prévues à cet effet et appartenant également aux moyens d'assemblage primaires 12.

Un carter 22 de la partie réceptrice 8 dispose de deux oreilles 24 également diamétralement opposées (une seule étant visible toujours pour des raisons de perspective), chaque oreille 24 étant conçue de manière à pouvoir venir en appui plan sur une partie supérieure et sur une partie avant d'un taquet 14 associé, dans le but d'assurer un bon positionnement de cette partie réceptrice 8 par rapport au cylindre d'accostage 6.

Afin de solidariser ces oreilles 24 sur les taquets 14, les moyens de fixation primaires 12 comportent en outre deux vis moletées imperdables 26 respectivement associées aux deux taquets 14 diamétralement opposés, chaque vis moletée imperdable 26 traversant une oreille 24 et étant destinée à coopérer avec un trou taraudé 28 pratiqué sur le taquet associé 14.

Toujours en ce qui concerne la partie réceptrice 8, il est noté que celle-ci présente de préférence deux manchons tubulaires 30a, 30b qui sont par exemple assemblés par vissage sur le carter 22, et qui sont respectivement destinés au refoulement et à l'aspiration.

En fonction du profil choisi, un flexible d'aspiration (non représenté) est raccordé à l'intérieur de la boîte à gant 4 sur le manchon 30b, dans le but de pouvoir procéder, lors des « campagnes inter-teneur », à l'assainissement de cette boîte 4 par aspiration des poudres contenues dans l'enceinte de confinement 5. A ce titre, il est indiqué que la volute d'aspiration 8 est préférentiellement raccordée en aval à un pot décanteur cyclonique ou à un filtre quelconque pour récupérer les poussières et autres particules.

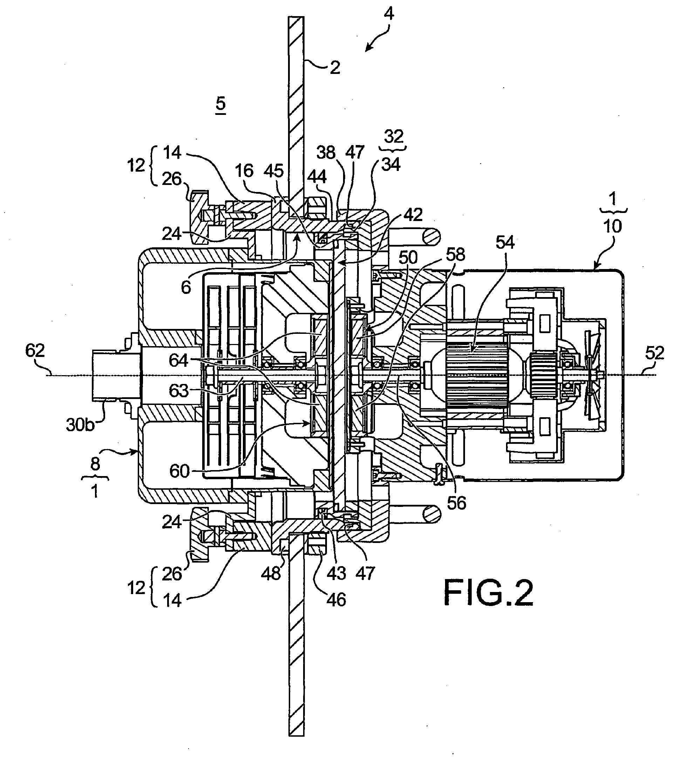

Par ailleurs, la partie moteur 10 de l'aspirateur 1 comporte des moyens de fixation secondaires 32 munis principalement d'une bride 34 équipée de quatre saillies 36 destinées à coopérer respectivement avec quatre rampes hélicoïdales en baïonnette avec butée anti-rotation (non visibles sur la figure 1 et référencées 47 sur la figure 2), ces rampes globalement agencées autour d'un même cercle étant de préférence usinées en bout du cylindre d'accostage 6. Bien entendu, les saillies et rampes précitées peuvent être prévues dans un nombre inférieur ou supérieur à quatre.

De cette façon, les quatre rampes hélicoïdales ainsi que les quatre saillies 36 disposées symétriquement et prenant chacune sensiblement la forme d'une portion annulaire, permettent d'assurer une fixation du type à baïonnette entre la partie moteur 10 et le cylindre d'accostage 6 en effectuant une simple rotation manuelle de ce dernier, exactement de la même façon qu'est obtenue la fixation connue de l'homme du métier d'une bague de sécurité extérieure sur ce même cylindre 6.

En outre, la partie moteur 10 comprend une portion d'extrémité 38 en forme d'anneau destinée à venir épouser la surface extérieure d'une portion cylindrique extérieure 44 du cylindre d'accostage 6, dans le but évident d'assurer un bon positionnement de cette partie moteur par rapport au cylindre d'accostage 6. De plus, la portion d'extrémité 38 en forme d'anneau est disposée coaxialement à la bride 34 et autour et à distance de cette dernière, comme cela est le mieux visible sur la figure 2 qui va à présent être décrite. Par ailleurs, l'espace annulaire situé entre la portion d'extrémité 38 et la bride 34 est alors destiné à recevoir l'extrémité annulaire extérieure du cylindre d'accostage 6.

En référence donc à la figure 2 représentant une vue en coupe selon le plan P de la figure 1, ce plan P horizontal traversant diamétralement l'aspirateur 1 de façon à couper les deux taquets 14, on peut voir cet aspirateur 1 dans une configuration montée sur la boîte à gant 4.

Ainsi, lorsque l'aspirateur 1 équipe la boîte à gant 4, il est tout d'abord précisé que les parties réceptrice 8 et moteur 10 sont séparées par un équipement 42 logé dans le cylindre d'accostage 6 concerné, cet équipement 42 étant du type hublot ou tape pleine.

L'équipement 42 est maintenu dans le cylindre 6 d'une façon connue de l'homme du métier, à savoir notamment à l'aide d'un joint à lèvre 43 assurant la double fonction d'étanchéité statique en position de travail et d'étanchéité dynamique en cas de mise en place initiale à l'aide d'un canon d'éjection, ainsi qu'à l'aide d'un flasque 45 venant se serrer à l'intérieur d'une rainure usinée dans le cylindre 6.

D'autre part, il est rappelé que le maintien du cylindre d'accostage 6 en acier inoxydable sur la paroi 2 de la boîte à gant 4 s'effectue à l'aide de la collerette intérieure d'appui 16, ainsi qu'à l'aide d'un écrou 46 vissé à l'extérieur de l'enceinte de confinement 5 et assurant l'écrasement d'un joint torique 48 agencé dans une gorge prévue sur cette même collerette intérieure d'appui 16.

Pour réaliser l'entraînement sans contact de la partie réceptrice 8 à l'aide de la partie moteur 10, il est fait appel au magnétisme d'origine naturelle, à savoir aux aimants permanents.

Ainsi, la partie moteur 10 comporte un plateau d'entraînement 50 disposé perpendiculairement à l'axe de rotation 52 ainsi qu'à l'arbre de sortie 56 du moteur 54, ce plateau 50 étant muni d'aimants permanents 58 disposés radialement, c'est-à-dire en couronne. A titre d'exemple non limitatif, les aimants permanents 58 sont au nombre de quatre et disposés symétriquement sur le plateau d'entraînement 50.

De la même manière, la partie réceptrice 8 comporte un plateau récepteur 60 disposé perpendiculairement à l'axe de rotation 62 et à l'arbre de sortie 63 de la volute, ce plateau 60 étant également muni d'aimants permanents 64 disposés radialement. Ici encore, les aimants permanents 64 sont au nombre de quatre et disposés symétriquement sur le plateau d'entraînement 60. Bien entendu, les aimants 58, 64 peuvent être prévues dans un nombre inférieur ou supérieur à quatre, sans sortir du cadre de l'invention.

Par conséquent, on peut s'apercevoir que le plateau d'entraînement 50 fait face à la surface extérieure du hublot 42, tandis que le plateau récepteur 60 fait face à la surface intérieure de ce même hublot 42, impliquant que les deux plateaux 50, 60 se font face et sont parallèles entre eux.

Bien entendu, lorsque l'aspirateur 1 est assemblé de la façon qui est représentée sur la figure 2, la distance séparant les deux plateaux 50, 60 est telle qu'elle permet de réaliser la transmission de puissance au travers de la paroi du hublot 42, par l'intermédiaire du flux magnétique.

A titre indicatif, il est noté que le plateau récepteur 60 peut être protégé à l'aide de moyens quelconques afin de permettre un nettoyage facile à l'opérateur.

De plus, en ce qui concerne la partie moteur 10 de l'aspirateur 1, celle-ci est équipée d'un système électronique associé au moteur 54. Ce système permet de préserver le moteur 54 de tout dommage électrique, mais autorise surtout un démarrage progressif de ce dernier. Un potentiomètre variable permet alors d'adapter la vitesse de rotation du moteur 54, et ainsi, le débit et la vitesse de la veine gazeuse engendrée par la volute d'aspiration 8. Cette faculté permet avantageusement une sélection de la granulométrie de la matière à aspirer, et assure ainsi une dissociation entre les poussières fines, les brisures, et les débris de taille plus importante.

Pour réaliser l'assemblage du dispositif d'intervention motorisé 1, un procédé selon un mode de réalisation préféré de la présente invention consiste tout d'abord à choisir le cylindre d'accostage 6 pour le support de ce dispositif 1 parmi la multitude de cylindres présents sur la boite à gant 4, le choix étant par exemple effectué en fonction de la localisation des poudres à aspirer.

Ensuite, un équipement 42 du type hublot ou tape pleine est logé dans le cylindre d'accostage retenu 6 à l'aide d'un canon d'éjection, cette opération n'étant bien entendu effectuée que lorsqu'un tel équipement n'est pas déjà présent à cet emplacement.

Par la suite, on procède à l'introduction de la partie réceptrice 8 à l'intérieur de la boîte à gant 4, par l'intermédiaire de moyens conventionnels connus de l'homme du métier, tels qu'un sas.

Les taquets 14 sont ensuite vissés sur les trous taraudés 18 de la collerette intérieure d'appui 16, de façon à ce que les vis de fixation 20 ne fassent pas saillie de ces mêmes taquets 14, qui peuvent alors rester à demeure sur le cylindre d'accostage 6.

Les taquets 14 étant à présent installés, il suffit alors de positionner correctement les deux oreilles 24 du carter 22 contre ces taquets 14, puis de visser les vis moletées 26 dans les trous taraudés 28 des taquets 14. Ainsi, le serrage des vis moletées 26 traversant les oreilles 24 permet un assemblage mécanique rigide de la partie réceptrice 8 sur le cylindre d'accostage 6.

Naturellement, l'ensemble des opérations liées à l'installation de la partie réceptrice 8 sont effectuées manuellement par un opérateur situé à l'extérieur de la boîte à gant 4, et utilisant par exemple un ou plusieurs gants équipant des cylindres d'accostage de cette même boîte 4.

Pour la mise en oeuvre de l'opération de montage de la partie moteur 10, il faut d'abord s'assurer que la bague de sécurité extérieure associée à l'équipement 42 est déposée. Lorsque tel est le cas, les rampes hélicoïdales 47 du cylindres d'accostage 6 sont libres, et elles permettent par conséquent la fixation de la bride 34 de la partie moteur 10 par simple rotation de cette dernière, de préférence mise en oeuvre manuellement par un opérateur situé à l'extérieur de la boîte à gant.

Enfin, il est indiqué que l'ordre de montage entre la partie réceptrice 8 et la partie moteur 10 pourrait être inversé par rapport à celui exposé ci-dessus, sans sortir du cadre de l'invention.

Bien entendu, diverses modifications peuvent être apportées par l'homme du métier au dispositif d'intervention motorisé 1, à la boîte à gant 4 ainsi qu'au procédé d'assemblage qui viennent d'être décrits, uniquement à titre d'exemples non limitatifs.

## Revendications

1. Dispositif d'intervention motorisé (1) pour boîte à gant (4), ledit dispositif comportant une partie réceptrice (8) destinée à être entraînée par une partie moteur (10), ladite partie réceptrice (8) disposant de moyens de fixation primaires (12) conçus de façon à permettre le montage de cette partie réceptrice (8) à l'intérieur de ladite boîte à gant (4) sur un cylindre d'accostage (6) prévu sur cette dernière, et ladite partie moteur (10) disposant de moyens de fixation secondaires (32) conçus de façon à permettre le montage de cette partie moteur (10) sur ledit cylindre d'accostage (6), à l'extérieur de ladite boîte à gant (4).

2. Dispositif d'intervention motorisé (1) selon la revendication 1, **caractérisé en ce que** lesdits moyens de fixation primaires (12) comprennent des vis (20) destinées à coopérer avec des trous taraudés (18) prévus sur une collerette intérieure d'appui (16) dudit cylindre d'accostage (6), et **en ce que** lesdits moyens de fixation secondaires (32) comprennent une bride (34) équipée de saillies (36) destinées à coopérer avec des rampes (47) prévues sur ledit cylindre d'accostage (6), afin de permettre une fixation du type à baïonnette.

3. Dispositif d'intervention motorisé (1) selon la revendication 2, **caractérisé en ce que** lesdits moyens de fixation primaires (12) comprennent en outre deux taquets (14) destinés à être montés sur ladite collerette intérieure d'appui (16) du cylindre d'accostage (6) par l'intermédiaire desdites vis (20), ainsi que des vis moletées (26) destinées à assurer l'assemblage d'un carter (22) de ladite partie réceptrice (8), sur lesdits taquets (14).

4. Dispositif d'intervention motorisé (1) selon l'une quelconque des revendications précédentes, **caractérisé en ce qu'**il est à entraînement magnétique.

5. Dispositif d'intervention motorisé (1) selon la revendication 4, **caractérisé en ce que** ladite partie moteur (10) comporte un plateau d'entraînement (50) muni d'aimants permanents (58), et **en ce que** ladite partie réceptrice (8) comporte un plateau récepteur (60) également muni d'aimants permanents (64) .

6. Dispositif d'intervention motorisé (1) selon l'une quelconque des revendications précédentes, **caractérisé en ce qu'**il est un aspirateur.

7. Dispositif d'intervention motorisé (1) selon la revendication 6, **caractérisé en ce que** ladite partie réceptrice (8) est une volute d'aspiration munie d'un manchon tubulaire (30b) pour le raccordement avec un flexible d'aspiration.

8. Boîte à gant (4) disposant d'au moins un cylindre d'accostage (6) conçu de manière à pouvoir recevoir un équipement (42), ladite boîte à gant (4) comprenant en outre un dispositif d'intervention motorisé (1) comportant une partie réceptrice (8) apte à être entraînée par une partie moteur (10) et destinée à fonctionner à l'intérieur de ladite boîte à gant (4), ledit dispositif d'intervention motorisé (1), assemblé sur ledit cylindre d'accostage (6) de ladite boîte à gant (4), étant tel que celui revendiqué selon l'une quelconque des revendications précédentes.

9. Boîte à gant (4) selon la revendication 8, **caractérisée en ce que** ladite partie réceptrice (8) et ladite partie moteur (10) sont séparées par un équipement (42) monté sur ledit cylindre d'accostage (6).

10. Boite à gant (4) selon la revendication 9, **caractérisée en ce que** ledit équipement (42) est un hublot ou une tape pleine.

11. Boîte à gant (4) selon l'une quelconque des revendications 8 à 10, **caractérisée en ce que** lesdits moyens de fixation primaires (12) de la partie réceptrice (8) coopèrent avec des trous taraudés (18) prévus sur une collerette intérieure d'appui (16) dudit cylindre d'accostage (6), et **en ce que** lesdits moyens de fixation secondaires (32) coopèrent avec des rampes (47) prévues sur ledit cylindre d'accostage (6), afin d'obtenir une fixation du type à baïonnette.

12. Boîte à gant (4) selon l'une quelconque des revendications 8 à 11, **caractérisée en ce qu'**elle comporte une pluralité de cylindres d'accostage (6), chacun étant capable, alternativement, de recevoir ledit dispositif d'intervention motorisé (1).

13. Boîte à gant (4) selon l'une quelconque des revendications 8 à 12, **caractérisée en ce que** ledit dispositif d'intervention motorisé (1) est un aspirateur.

14. Boîte à gant (4) selon l'une quelconque des revendications 8 à 13, **caractérisée en ce qu'**elle est destinée à être utilisée dans le domaine nucléaire.

15. Boîte à gant (4) selon la revendication 14, **caractérisée en ce qu'**elle est destinée à la fabrication de combustible nucléaire.

16. Boîte à gant (4) selon l'une quelconque des revendications 8 à 15, **caractérisée en ce qu'**elle est destinée à fonctionner en dépression.

17. Procédé d'assemblage d'un dispositif d'intervention motorisé (1) selon l'une quelconque des revendications 1 à 7 sur une boîte à gant (4) disposant d'au moins un cylindre d'accostage (6) conçu de manière à pouvoir recevoir un équipement (42), **caractérisé en ce qu'**il comprend les étapes suivantes :
- introduction de ladite partie réceptrice (8) du dispositif d'intervention motorisé (1) à l'intérieur de ladite boîte à gant (4) ;
- montage de ladite partie réceptrice (8) sur un cylindre d'accostage (6) de ladite boîte à gant (4) ; et
- montage à l'extérieur de ladite boîte à gant (4) de ladite partie moteur (10) sur ledit cylindre d'accostage (6).

## Claims

1. A powered operation device (1) for a glove box (4), said device including a receiving portion (8) intended to be driven by a motor part (10), said receiving portion (8) having primary attachment means (12) designed so as to allow mounting of this receiving portion (8) inside said glove box (4) on a docking cylinder (6) provided on the latter, and said motor part (10) having secondary attachment means (32) designed so as to enable this motor part (10) to be mounted on said docking cylinder (6), outside said glove box (4).

2. The powered operation device (1) according to claim 1, **characterized in that** said primary attachment means (12) comprise screws (20) intended to cooperate with tapped holes (18) provided on an inner supporting flange (16) of said docking cylinder (6), and **in that** said secondary attachment means (32) comprise a bracket (34) equipped with projections (36) intended to cooperate with ramps (47) provided on said docking cylinder (6), in order to provide a bayonet type attachment.

3. The powered operation device (1) according to claim 2, **characterized in that** said primary attachment means (12) further comprise two cleats (14) intended to be mounted on said inner supporting flange (16) of the docking cylinder (6) via said screws (20), as well as knurled screws (26) intended to provide assembling of a case (22) of said receiving portion (8), on said cleats (14).

4. The powered operation device (1) according to any of the preceding claims, **characterized in that** it has a magnetic drive.

5. The powered operation device (1) according to claim 4, **characterized in that** said motor part (10) includes a drive plate (50) provided with permanent magnets (58), and **in that** said receiving portion (8) includes a receiving plate (60) also provided with permanent magnets (64).

6. The powered operation device (1) according to any of the preceding claims, **characterized in that** it is a vacuum cleaner.

7. The powered operation device (1) according to claim 6, **characterized in that** said receiving portion (8) is a suction spiral object provided with a tubular sleeve (30b) for connection with a suction flexible hose.

8. A glove box (4) having at least one docking cylinder (6) designed so as to be able to receive a piece of equipment (42), said glove box (4) further comprising a powered operation device (1) including a receiving portion (8) capable of being driven by a motor part (10) and intended to operate inside said glove box (4), said powered operation device (1), assembled on said docking cylinder (6) of said glove box (4), being such as the one claimed according to any of the preceding claims.

9. The glove box (4) according to claim 8, **characterized in that** said receiving portion (8) and said motor part (10) are separated by a piece of equipment (42) mounted on said docking cylinder (6).

10. The glove box (4) according to claim 9, **characterized in that** said piece of equipment (42) is a window or a solid sealed cover.

11. The glove box (4) according to any of claims 8 to 10, **characterized in that** said primary attachment means (12) of the receiving portion (8) cooperate with tapped holes (18) provided on an inner supporting flange (16) of said docking cylinder (6), and **in that** said secondary attachment means (32) cooperate with ramps (47) provided on said docking cylinder (6), in order to obtain a bayonet type attachment.

12. The glove box (4) according to any of claims 8 to 11, **characterized in that** it includes a plurality of docking cylinders (6), each being capable of alternately receiving said powered operation device (1).

13. The glove box (4) according to any of claims 8 to 12, **characterized in that** said powered operation device (1) is a vacuum cleaner.

14. The glove box (4) according to any of claims 8 to 13, **characterized in that** it is intended to be used in the nuclear field.

15. The glove box (4) according to claim 14, **characterized in that** it is intended for nuclear fuel manufacturing.

16. The glove box (4) according to any of claims 8 to 15, **characterized in that** it is intended to operate under a negative pressure.

17. A method for assembling a powered operation device (1) according to any of claims 1 to 7 on a glove box (4) having at least one docking cylinder (6) designed so as to be able to receive a piece of equipment (42), **characterized in that** it comprises the following steps:
- introducing said receiving portion (8) of the powered operation device (1) inside said glove box (4) ;
- mounting said receiving portion (8) on a docking cylinder (6) of said glove box (4); and
- mounting on the outside of said glove box (4) said motor part (10) on said docking cylinder (6).

## Patentansprüche

1. Motorisierte Einsatzvorrichtung (1) für einen Handschuhkasten (4), welche Vorrichtung einen Aufnahmeteil (8) umfasst, der dazu ausgelegt ist, von einem Motorteil (10) angetrieben zu werden, wobei der Aufnahmeteil (8) über primäre Befestigungsmittel (12) verfügt, die dazu ausgelegt sind, die Montage dieses Aufnahmeteils (8) im inneren des Handschuhkastens (4) an einem Ankopplungszylinder (6) zu ermöglichen, der an diesem letzteren vorgesehen ist, und wobei der Motorteil (10) über sekundäre Befestigungsmittel (32) verfügt, die dazu ausgelegt sind, die Montage dieses Motorteils (10) an dem Ankopplungszylinder (6) an der Außenseite des Handschuhkastens (4) zu ermöglichen.

2. Motorisierte Einsatzvorrichtung (1) nach Anspruch 1, **dadurch gekennzeichnet, dass** die primären Befestigungsmittel (12) Schrauben (20) umfassen, die dazu ausgelegt sind, mit Gewindelöchern (18) zusammenzuwirken, die an einem inneren Anlagekragen (16) des Ankopplungszylinders (6) vorgesehen sind, und dass die sekundären Befestigungsmittel (32) einen Flansch (34) umfassen, der mit Vorsprüngen (36) ausgestattet ist, welche dazu ausgelegt sind, mit Rampen (47) zusammenzuwirken, die an dem Ankopplungszylinder (6) vorgesehen sind, um eine Befestigung vom Bajonetttyp zu ermöglichen.

3. Motorisierte Einsatzvorrichtung (1) nach Anspruch 2, **dadurch gekennzeichnet, dass** die primären Befestigungsmittel (12) ferner zwei Klötze (14) umfassen, die dazu ausgelegt sind, an dem inneren Anlagekragen (16) des Ankopplungszylinders (6) mit Hilfe der Schrauben (20) montiert zu sein, sowie Rändelschrauben (26), die dazu ausgelegt sind, die Anbringung eines Gehäuses (22) des Aufnahmeteils (8) an den Klötzen (14) zu gewährleisten.

4. Motorisierte Einsatzvorrichtung (1) nach einem der vorhergehenden Ansprüche, **dadurch gekennzeichnet, dass** sie einen magnetischen Antrieb aufweist.

5. Motorisierte Einsatzvorrichtung (1) nach Anspruch 4, **dadurch gekennzeichnet, dass** der Motorteil (10) eine mit Permanentmagneten (58) ausgestattete Antriebsplatte (50) umfasst, und dass der Aufnahmeteil (8) eine ebenfalls mit Permanentmagneten (64) ausgestattete Aufnahmeplatte (60) umfasst.

6. Motorisierte Einsatzvorrichtung (1) nach einem der vorhergehenden Ansprüche, **dadurch gekennzeichnet, dass** sie ein Absauggerät ist.

7. Motorisierte Einsatzvorrichtung (1) nach Anspruch 6, **dadurch gekennzeichnet, dass** der Aufnahmeteil (8) eine Absaugschnecke ist, die mit einem Rohrstutzen (30b) zum Anschluss an einen Absaugschlauch ausgestattet ist.

8. Handschuhkasten (4), der über wenigstens einen Ankopplungszylinder (6) verfügt, welcher derart gestaltet ist, dass er ein Gerät (42) aufnehmen kann, wobei der Handschuhkasten (4) ferner eine motorisierte Einsatzvorrichtung (1) umfasst, die einen Aufnahmeteil (8) umfasst, welcher dazu ausgelegt ist, von einem Motorteil (10) angetrieben zu werden, und dazu bestimmt ist, im Inneren des Handschuhkastens (4) zu arbeiten, wobei die motorisierte Einsatzvorrichtung (1), die an dem Ankopplungszylinder (6) des Handschuhkastens (4) angebracht ist, so beschaffen ist, wie jene, die gemäß einem der vorhergehenden Ansprüche beansprucht wird.

9. Handschuhkasten (4) nach Anspruch 8, **dadurch gekennzeichnet, dass** der Aufnahmeteil (8) und der Motorteil (10) durch ein Gerät (42) getrennt sind, das an dem Ankopplungzylinder (6) montiert ist.

10. Handschuhkasten (4) nach Anspruch 9, **dadurch gekennzeichnet, dass** das Gerät (42) ein Bullauge oder ein Blindflansch ist.

11. Handschuhkasten (4) nach einem der Ansprüche 8 - 10, **dadurch gekennzeichnet, dass** die primären Befestigungsmittel (12) des Aufnahmeteils (8) mit Gewindelöchern (18) zusammenwirken, die an einem inneren Anlagekragen (16) des Ankopplungszylinders (6) vorgesehen sind, und dass die sekundären Befestigungsmittel (32) mit Rampen (47) zusammenwirken, die an dem Ankopplungszylinder (6) vorgesehen sind, um eine Befestigung vom Bajonetttyp zu erhalten.

12. Handschuhkasten (4) nach einem der Ansprüche 8 - 11. **dadurch gekennzeichnet, dass** er eine Mehrzahl von Ankopplungszylindern (6) umfasst, von denen jeder in der Lage ist, alternativ die motorisierte Einsatzvorrichtung (1) aufzunehmen.

13. Handschuhkasten (4) nach einem der Ansprüche 8 - 12, **dadurch gekennzeichnet, dass** die motorisierte Einsatzvorrichtung (1) ein Absauggerät ist.

14. Handschuhkasten (4) nach einem der Ansprüche 8 - 13, **dadurch gekennzeichnet, dass** er dazu ausgelegt ist im Nuklearbereich eingesetzt zu werden.

15. Handschuhkasten (4) nach Anspruch 14, **dadurch gekennzeichnet, dass** er für die Herstellung von nuklearem Brennstoff bestimmt ist.

16. Handschuhkasten (4) nach einem der Ansprüche 8 - 15, **dadurch gekennzeichnet, dass** er dazu ausgelegt ist, bei Unterdruck zu arbeiten.

17. Verfahren zur Anbringung einer motorisierten Einsatzvorrichtung (1) nach einem der Ansprüche 1 - 7 an einem Handschuhkasten (4), der über wenigstens einen Ankopplungszylinder (6) verfügt, welcher dazu ausgelegt ist, dass er ein Gerät (42) aufnehmen kann, **dadurch gekennzeichnet, dass** es die folgenden Schritte umfasst:
- Einführen des Aufnahmeteils (8) der motorisierten Einsatzvorrichtung (1) in das Innere des Handschuhkastens (4);
- Montage des Aufnahmeteils (8) an einem Ankopplungszylinder (6) des Handschuhkastens (4); und
- Montage des Motorteils (10) an der Außenseite des Handschuhkastens (4) an dem Ankopplungszylinder (6).
